# NEUE EUROPÄISCHE PATENTSCHRIFT

(11) **EP 0 767 342 B2**
(45) Veröffentlichungstag und Bekanntmachung des Hinweises auf die Entscheidung über den Einspruch: **03.12.2003**
(45) Hinweis auf die Patenterteilung: 17.01.2001
(21) Anmeldenummer: 96114044.9
(22) Anmeldetag: 03.09.1996
(51) Int. Cl.: F23G 5/027, F23L 7/00

(54) **Verfahren zur thermischen Entsorgung von losem Müll**
Process for disposal of irregular waste
Procédé d'élimination des déchets irréguliers

(30) Priorität: 06.10.1995 CH 282995
(43) Veröffentlichungstag der Anmeldung: 09.04.1997
(73) Patentinhaber: Von Roll Umwelttechnik AG, 8005 Zürich (CH)
(72) Erfinder: Rüegg, Hans, 5610 Wohlen (CH); Ungricht, Thomas, 8050 Zürich (CH); Frey, Ruedi, 8307 Effretikon (CH); Forsberg, Stefan, 8912 Obfelden (CH); Hugentobler, Ernst, 8615 Wermatswil (CH); Müller, Patrick, 8201 Schaffhausen (CH)
(74) Vertreter: Patentanwälte Schaad, Balass, Menzl & Partner AG

(56) Entgegenhaltungen:
- EP-A- 0 663 564
- WO-A-93/17280
- WO-A-95/14885
- DE-A- 2 946 774
- DE-A- 4 002 258
- DE-A- 4 104 507
- DE-C- 4 130 416
- DE-C- 4 337 421
- JP-A- 53 030 983
- US-A- 3 747 542
- US-A- 4 650 546
- Hässler, G.(Hrsg.): THERMOSELECT - Der neue Weg, Restmüll umweltgerecht zu behandeln, Tagungsband zur Fachtagung THERMOSELECT, 19.01.95, Rastatt, Verlag Karl Goerner, Karlsruhe, 1995, S. 1, 15-21

## Beschreibung

Die Erfindung betrifft ein Verfahren zur thermischen Entsorgung von losem Müll und eine Vorrichtung zur Durchführung des Verfahrens.

Verfahren zurthermischen Entsorgung von losem Müll sind beispielsweise aus der CH-PS 482 988, der CH-PS 432 703 der DE-C-4 337 421 der US-A-4 650 546, der US-A-4 130 416 oder aus der DE-A-2 946 774 bekannt, bei welchen brennbare Bestandteile des Mülls in einem Schmelzofen verbrannt und unbrennbare Bestandteile als Schmelze abgezogen werden. Bei allen bisherigen Verfahren dieser Art stellt die Inhomogenität des Mülls und die sich daraus ergebenden Leistung- und Druckschwankungen ein grosses Problem dar, das bis jetzt eine Vorbehandlung des Mülls unumgänglich gemacht hat. Die Vorbehandlung besteht normalerweise aus Sortierung, Vorzerkleinerung, Vermischung und Homogenisierung des Mülls. Aber auch mit diesen Massnahmen kann noch nicht gewährleistet werden, dass z.B. keine grösseren, müllgebundenen Wassermengen auf einmal in den Schmelzofen beschickt werden, die dort durch explosionsartiges Verdampfen zu grossen Druckschwankungen führen. Bei den aus vorstehend genannten Druckschriften bekannten Verfahren wird der Müll daher in einem separaten Raum vorgetrocknet, um danach unter Zuführung von zusätzlichen Brennstoffen in einem Schmelzraum verbrannt und eingeschmolzen zu werden. Die Verwendung von Fremdbrennstoffen zur Erzeugung der notwendigen Schmelztemperatur verteuert das Verfahren und ist daher unwirtschaftlich.

Der vorliegenden Erfindung liegt die Aufgabe zugrunde, ein wirtschaftlicheres Verfahren der eingangs genannten Art vorzuschlagen, bei dem ohne aufwendige, spezielle Vorbehandlung des Mülls und ohne Einsatz von Fremdenergie beherrschbare, vorzugsweise konstante Druckverhältnisse geschaffen werden.

Diese Aufgabe wird erfindungsgemäss durch die im Kennzeichen des Anspruches 1 angegebenen Merkmale gelöst.

Überraschenderweise wurde gefunden, dass die Abgase aus dem erfindungsgemässen Verfahren nur wenig Stickoxide enthalten, so dass die bei der Reinigung von Abgasen aus Müllverbrennungsanlagen sonst notwendige und aufwendige Entstickung entfallen kann.

Ein weiterer Vorteil des erfindungsgemässen Verfahrens besteht in der Minimierung der Rauchgasmenge, bedingt durch den Einsatz von Gasen mit hohem Sauerstoffanteil. Die erhebliche Reduktion der Rauchgasmenge führt dazu, dass nachgeschaltete Rauchgasreinigungs- und Rauchgaskühlungsanlagen klein und damit kostengünstig ausgeführt werden können. Ausserdem führt eine kleine Abgasmenge beim Einhalten bestehender Grenzwerte zu niedrigen Schadstoffemissionen.

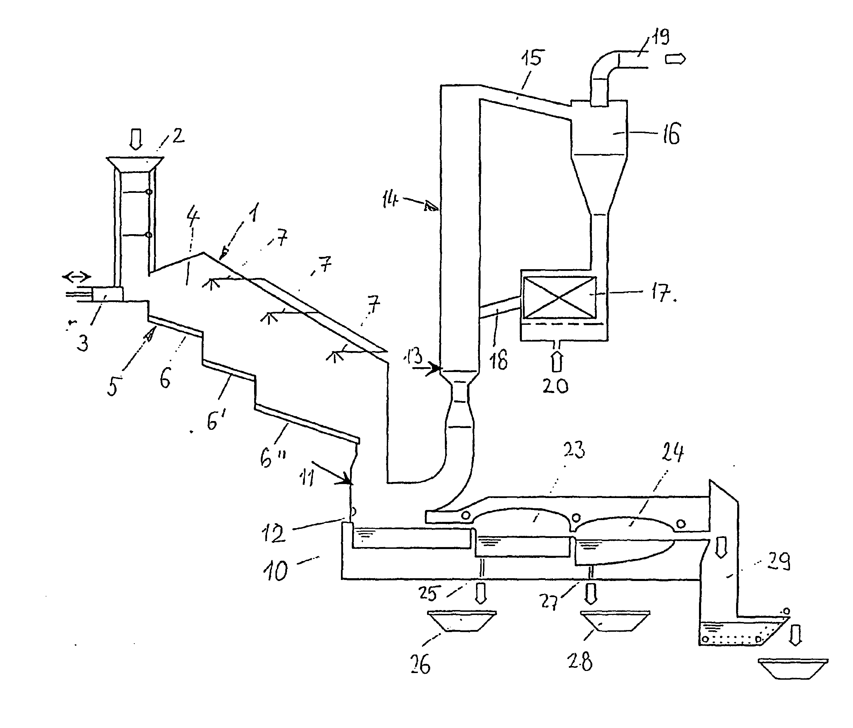

Das erfindungsgemässe Verfahren wird imfolgenden anhand der Zeichnung näher erläutert.

Ein Pyrolyseofen ist in der Zeichnung mit 1 bezeichnet. Der zu behandelnde Müll, insbesondere Hausmüll, wird ohne besondere Vorbehandlung, insbesondere ohne Homogenisierung, in nicht näher dargestellter Weise in einen Einfülltrichter 2 gefüllt und mit Hilfe eines am unteren Ende des Einfülltrichters 2 angeordneten Dosierstössels 3 auf einen Rost 5 geschoben, der in einem Feuerungsraum 4 des Pyrolyseofens 1 angeordnet ist. Mit jedem Vorwärtsschub des Dosierstössels 3 wird die gleiche Menge Müll dem Rost 5 zugeführt. Roste dieser Art sind z.B. aus der Müllverbrennung bekannt.

Der Müll wird in einer ersten Verfahrensstufe auf dem Rost 5 durch den Feuerungsraum 4 gefördert und dabei getrocknet und pyrolysiert. Unter Zuführung eines mindestens 40% Sauerstoff enthaltenden Gases werden brennbare Gase aus dem Müll oberhalb der Müllschicht verbrannt und die Strahlungswärme aus diesem Verbrennungsvorgang bewirkt die Pyrolyse. Dabei wird der Sauerstoff in einer unterstöchiometrischer Menge - bezogen auf die brennbaren Bestandteile des Mülls - zugeführt.

Für die Zuführung des den hohen Sauerstoffanteil aufweisenden Gases in den Feuerungsraum 4 münden oberhalb der sich auf dem Rost 5 befindenden Müllschicht örtlich verteilt mehrere Elemente 7 in den Pyrolyseofen 1. Die Elemente 7 können vorzugsweise als Gaslanzen, Düsen oder mit Radialbohrungen versehene Rohre ausgebildet sein. Als den Sauerstoff enthaltendes Gas kann technischer Sauerstoff mit etwa 90% Sauerstoffanteil, mit Sauerstoff angereicherte Luft oder reiner Sauerstoff verwendet werden. Die Zuführung des mindestens 40% Sauerstoff enthaltenden Gases kann aufgrund der Temperaturentwicklung in gewünschter Art gesteuert werden, so dass beherrschbare Temperaturverhältnisse im Pyrolyseofen 1 gewährleistet sind.

Der oberhalb der sich auf dem Rost 5 befindenden Müllschicht in den Feuerungsraum 4 eingeführte Sauerstoff bildet zusammen mit den aus dem Müll entweichenden brennbaren flüchtigen Stoffen Flammen. Die Müllschicht wird durch die thermische Strahlung so weit erhitzt, dass die Pyrolyse stattfindet. Die flüchtigen Stoffe verbrennen teilweise. Das feste Pyrolyseprodukt ist Schlacke mit brennbaren Bestandteilen. Bei den brennbaren Bestandteilen handelt es sich hauptsächlich um Kohle. Dabei wird das Trocknen des Mülls sowie das Verflüchtigen von möglichst allen flüchtigen Bestandteilen des Mülls und Erzeugen eines festen, trockenen Pyrolyseprodukts mit möglichst hohem Anteil an brennbaren Bestandteilen angestrebt.

Der Rost 5 sorgt neben der Transportfunktion auch für ständiges Umwälzen des Abfalls, so dass immer wieder neue Abfalloberflächen der thermischen Behandlung im Feuerungsraum 4 ausgesetzt werden. Zu diesem Zweck weist eine Rostbahn in an sich bekannter und daher nicht näher dargestellter Weise mehrere treppenartig hintereinander angeordnete Rostblockreihen auf, wobei jeweils abwechselnd ortsfeste und bewegliche Rostblockreihen einander folgen. Der sich auf dem Rost 5 befindende Müll wird durch eine Schubbewegung der beweglichen Rostblockreihen vorwärtsgeschoben und gleichzeitig umgewälzt. Die geneigte Rostbahn kann sich ausserdem in der Länge aus mehreren Rostelementen 6 zusammensetzen, die bewegliche und unbewegliche Rostblockreihen aufweisen. In der Zeichnung sind drei solche Rostelemente 6, 6', 6", die separat angetrieben werden können, schematisch angedeutet. Ausserdem können mehrere Rostbahnen nebeneinander angebracht werden, die die Breite des Rostes bilden. Die Anzahl der Rostelemente 6 und der Rostbahnen hängt von der vorgegebenen Durchsatzmenge des Mülls ab.

Das feste Pyrolyseprodukt sowie die nicht verbrannten flüchtigen Stoffe werden einem dem Pyrolyseofen 1 nachgeschalteten Schmelzofen 10 zugeführt.

Im Schmelzofen 10 wird eine zweite Verfahrensstufe durchgeführt. Die brennbaren Bestandteile des festen Pyrolyseproduktes werden unter Beaufschlagung mit einem mindestens 40% Sauerstoff enthaltenden Gas verbrannt und die nicht brennbaren Bestandteile werden geschmolzen. Die Eindüsung des den Sauerstoff enthaltenden Gases, vorzugsweise des technischen Sauerstoffes mit ca. 90% Sauerstoffanteil (es könnte sich allerdings auch um mit Sauerstoff angereicherte Luft oder um reinen Sauerstoff handeln), ist in der Zeichnung nur schematisch mit Pfeil 11 angedeutet und wird in Wirklichkeit über an die Oberfläche des Schmelzbades bzw. auf das auf dem Schmelzbad verbrennende und einschmelzende feste Pyrolyseprodukt gerichtete Lanzen oder Düsen realisiert. Die Eindüsung erfolgt vorzugsweise mit einer Geschwindigkeit, die mindestens der Schallgeschwindigkeit entspricht. Dadurch wird eine ausreichende Verwirbelung und Durchmischung der Müllschicht erreicht.

Der Schmelzofen 10 weist in einer bevorzugten Ausführungsform einen vertikalen, zylindrischen Ofenraum 12 auf, in welchen in einer nicht dargestellten Weise schräg nach unten gerichtete Lanzen tangential zu einem imaginären Kreis münden, so dass durch die Beaufschlagung mit dem den hohen Sauerstoffanteil aufweisenden Gas die Schmelze in eine Drehbewegung versetzt wird, wodurch eine gute Durchmischung, ein schnelles Schmelzen und ein gleichmässiges Verbrennen gewährleistet ist. Ebenfalls von Vorteil ist es, wenn die das Gas zuführenden Düsen oder Lanzen in einem Abstand von der Wandauskleidung in den Ofenraum 12 münden; dann ist die Bewegung der Schmelze in der Nähe der Wand minimal, wodurch auch die thermische/mechanische Beanspruchung der Wandauskleidung minimiert wird. Die brennbaren Bestandteile des festen Pyrolyseproduktes können direkt auf dem sich drehenden Schmelzbad ruhig und ohne Druckschwankungen verbrennen, wobei die dadurch gewonnene Wärmeenergie zum Einschmelzen der nicht brennbaren Bestandteile ausreicht, ohne dass zusätzliche Brennstoffe benötigt werden. Da die im Pyrolyseofen 1 erzeugten, brennbaren Gase in der dargestellten, bevorzugten Ausführungsform ebenfalls durch den Schmelzofen 10 geleitet werden (sie könnten allerdings auch direkt einer Nachverbrennung mit einer externen Wärmeenergieausnützung unterzogen werden), kann auch ein Teil dieser Pyrolysegase mitverbrannt werden und ebenfalls zur Erzeugung der Wärmeenergie fürden Schmelzvorgang beitragen. Es kann aber auch, dem Wärmebedarf entsprechend, durch zusätzliche Sauerstoffeindüsung in den oberen Bereich des Ofenraumes 12 oberhalb des Schmelzbades eine zusätzliche Gasverbrennung erfolgen. Diese thermische Ergänzung bewirkt eine Abstrahlung der bei der Gasverbrennung erzeugten Wärme nach unten auf die Schmelze und erhöht die Effizienz des Schmelzvorganges.

Es wird in der zweiten Verfahrensstufe soviel Sauerstoff zugeführt, dass beim im Schmelzofen 10 stattfindenden Verbrennungsvorgang die erforderliche Schmelzwärme erzeugt wird, jedoch kein Sauerstoffüberschuss vorhanden ist, so dass keine unerwünschten Oxydationsreaktionen ablaufen und keine unerwünscht hohe Temperaturen entstehen.

Durch die Aufteilung des Verfahrens in zwei Stufen werden die Druck- und Temperaturspitzen geglättet, wodurch das Verfahren besser beherrschbar und die Beanspruchung der Anlage reduziert wird.

Die immer noch brennbaren Gase aus dem Schmelzofen 10 werden in einer Nachbrennkammer 14 mit Wärmeenergiegewinnung nachverbrannt. Die Nachbrennkammer 14 ist als ein auf dem Prinzip einer zirkulierenden Wirbelschicht funktionierender Wirbelschichtreaktor ausgebildet, dem die Gase aus dem Schmelzofen 10 als Fluidisierungsgase zugeführt und durch Sauerstoff-und/oder Verbrennungsluftzugabe (in der Zeichnung mit Pfeil 13 angedeutet) nachverbrannt werden. Als Wirbelschicht-Feststoff kann Quarz-Sand, Kalk oder andere Materialien eingesetzt werden.

Der Wirbelschichtreaktor wird mit einer derart grossen Gasgeschwindigkeit betrieben, dass zumindest ein Teil der Feststoffpartikel zusammen mit dem Rauchgasstrom aus der Nachbrennkammer 14 ausgetragen wird. Über eine Leitung 15 in einem Staubabscheider 16 angelangt, wird der Feststoff vom Rauchgasstrom getrennt. Der Staubabscheider 16 kann z.B. als ein Zyklon ausgebildet werden. Der abgeschiedene Feststoff wird vorzugsweise über einen externen Fliessbettkühler 17 in die Nachbrennkammer 14 zurückgeführt, so dass die zirkulierende Wirbelschicht entsteht. Im Fliessbettkühler 17 wird der im Staubabscheider 16 abgesonderte Feststoff in einer stationären Wirbelschicht (Fliessbett) durch direkten oder indirekten Wärmeübergang abgekühlt und danach über eine Leitung 18 erneut in die Nachbrennkammer 14 eingeleitet. In der Nachbrennkammer 14 nimmt dieser Feststoff die Wärme aus den heissen Gasen aus dem Schmelzofen 10 auf und erwärmt sich auf die in der Nachbrennkammer 14 herrschende Mischtemperatur. Es wäre aber auch möglich, die Wände der Nachbrennkammer 14 als Kühl- bzw. Wärmeübertragungsflächen auszugestalten oder weitere Wärmeübertragungsflächen direkt in der Wirbelschicht anzuordnen. Auch diese Massnahmen zur Wärmeabfuhr, allein oder in Kombination mit dem externen Fliessbettkühler 17, wären geeignet, um die Nachbrennkammer 14 unterhalb des Flugstaubschmelzpunktes bei einer optimalen Temperatur von etwa 900°C betreiben zu können.

Der rezirkulierte Feststoff bewirkt eine sehr homogene Temperaturverteilung in der Nachbrennkammer 14. Dies schafft optimale und einheitliche Reaktionsbedingungen für die Nachverbrennung. Die zirkulierende Wirbelschicht ermöglicht eine sehr effiziente Kühlung der heissen Gase.

Wie in der Zeichnung mit Pfeil 20 angedeutet, werden dem Fliessbettkühler 17 sauerstoffhaltige Gase als Fluidisierungsgase zugeführt, die in nicht näherdargestellten Weise oberhalb des Fliessbettes zu einer weiteren Verwendung wieder abgezogen werden.

Die ausgebrannten, vom Feststoff befreiten und gekühlten Rauchgase strömen über eine Leitung 19 zu weiteren, nicht dargestellten Rauchgasreinigungs- bzw. Rauchgaskühlungseinrichtungen, bevor sie in die Atmosphäre gelangen. Da die Rauchgasmenge sowohl in der ersten, als auch in der zweiten Verfahrensstufe sowie auch bei der Nachverbrennung durch den Einsatz von Sauerstoff gegenüber bisher bekannten Verfahren zur Müllentsorgung erheblich reduziert wird, kann auch das Bauvolumen derartiger Einrichtungen und ihr Aufwand reduziert werden.

Die Schmelze aus dem Schmelzofen 10 wird in einer dritten Verfahrensstufe unter reduzierenden Bedingungen nachbehandelt. Die Schmelze fliesst kontinuierlich aus dem Schmelzofen 10 in einen nachgeschalteten, ersten Schlackenbehandlungsofen 23, wo die in der Schmelze vorhandenen Schwermetalloxide durch Reduktion in ihre metallische Form überführt werden. Die Temperatureinstellung bei dieser Nachbehandlung der Schmelze ist von der gewünschten Reduktionsgeschwindigkeit abhängig. Zu diesem Zweck können beispielsweise Kohlenstoffelektroden als Heizelektroden, die gleichzeitig als Reduktionsmittel wirken, im Schlackenbehandlungsofen 23 zum Einsatz kommen.

Entsprechendes Verfahren zur Aufbereitung von festen Rückständen aus Müllverbrennungsanlagen und Vorrichtungen zum Durchführen des Verfahrens bilden Gegenstand der WO-A-9610097 (veröffentlicht am 04.04.96).

Die schwerflüchtigen, reduzierten Schwermetalle sammeln sich in einer flüssigen Phase am Boden des Schlackenbehandlungsofens 23 und können von dort abgestochen werden (vgl. Abstichöffnung 25 und Becken 26 in der Figur).

In einer bevorzugten und in der Figur dargestellten Ausführungsform ist der erste Schlackenbehandlungsofen 23 im oberen Bereich mit einem zweiten Schlackenbehandlungsofen 24 verbunden. Die Glasschmelze aus dem ersten Schlackenbehandlungsofen 23 fliesst in den zweiten Schlackenbehandlungsofen 24, wo ein erneutes Absetzen von noch in der Glasschmelze vorhandenem Metall erfolgt. Die im Schlakkenbehandlungsofen 24 gesammelte Metallschmelze wird durch die Abstrichöffnung 27 entfernt und im Bekken 28 gesammelt.

Die aus dem zweiten Schlackenbehandlungsofen 24 fliessende Glasschmelze - nun weitgehend frei von umweltschädlichen Schwermetallen - kann nach Abkühlung und Granulation in einem Wasserbad 29 als Baustoff, beispielsweise Klinkerersatz, in der Bauindustrie eingesetzt werden.

Zum Durchführen der ersten Verfahrensstufe, der Müllpyrolyse, kann anstelle des in der Zeichnung schematisch dargestellten, mit einem Rost versehenen Pyrolyseofens 1 auch ein Drehrohrofen verwendet werden, bei welchem der Feuerungsraum als eine Drehtrommel ausgebildet ist, durch welche der Müll unter gleichzeitiger Umwälzung gefördert und dabei unter Zuführung des Gases mit mindestens 40% Sauerstoffanteil pyrolysiert wird. Ein derartiges Verfahren sowie ein derartiger Drehrohrofen bilden Gegenstand der EP-A-704 658 (veröffentlicht am 03.04.96).

Im folgenden wird nun das erfindungsgemässe Verfahren durch ein Ausführungsbeispiel näher veranschaulicht.

### Beispiel:

In einer Anlage zum Durchführen des erfindungsgemässen Verfahrens wird 6000 kg/h Müll dem Pyrolyseofen 1 zugeführt und unter Zuführung von 1300 Nm ³/h technischen Sauerstoffs (93% Sauerstoffanteil) pyrolysiert. Das feste Pyrolyseprodukt wird in den Schmelzofen 10 eingeführt, wo es mit einer Menge von 1000 Nm ³/h technischen Sauerstoffs beaufschlagt und eingeschmolzen wird. Die Nachverbrennung der brennbaren Pyrolysegase in der auf dem Prinzip der zirkulierenden Wirbelschicht arbeitenden Nachbrennkammer 14 erfolgt unter Zugabe von 1130 Nm ³/h technischen Sauerstoffs (93%). Dem externen Fliessbettkühler 17 werden 3000 Nm ³/h Fluidisierungsluft zugeführt. (Kurzzeichen Nm³ bedeutet Normkubikmeter.)

Im Schmelzofen 10 wird Schmelze in einer Menge von 1180 kg/h produziert. Aus dieser Schmelze werden 1100 kg/h Granulat als Baustoff, beispielsweise Klinkerersatz und 80 kg/h Metalllegierung gewonnen.

## Patentansprüche

1. Verfahren zur thermischen Entsorgung von losem Müll, der in einer ersten Stufe umgewalzt und gefördert und durch unterstöchiometrische Verbrennungsprozesse getrocknet und von flüchtigen Bestandteilen befreit und anschliessend in einer zweiten Stufe verbrannt oder geschmolzen wird, **dadurch gekennzeichnet, dass** der lose Müll in der ersten Stufe pyrolysiert wird, indem ein mindestens 40% Sauerstoff enthaltendes Gas oberhalb der Müllschicht derart zugeführt wird, dass eine Verbrennung flüchtiger Bestandteile oberhalb der Müllschicht erfolgt, wodurch mittels Wärmestrahlung ein festes Pyrolyseprodukt und brennbare Pyrolysegase erzeugt werden und dass in der zweiten Stufe das feste Pyrolyseprodukt durch Verbrennung seiner brennbaren Bestandteile und gegebenenfalls durch Verbrennung von Pyrolysegasen geschmolzen wird, wobei so viel Sauerstoff, wie für die Erzeugung der Schmelzwärme erforderlich ist, mit einem mindestens 40% Sauerstoff enthaltenden Gas zugeführt wird.

2. Verfahren nach Anspruch 1, **dadurch gekennzeichnet, dass** in der zweiten Stufe zusätzliche Schmelzwärme durch eine Teilverbrennung von brennbaren Pyrolysegasen aus der ersten Stufe geliefert wird.

3. Verfahren nach Anspruch 2, **dadurch gekennzeichnet, dass** die Verbrennung brennbarer Pyrolysegase in der zweiten Stufe unter einer zusätzlichen Sauerstoffzufuhr in den Raum oberhalb der Schmelze erfolgt, wobei die bei der Gasverbrennung erzeugte Wärme auf die Schmelze abgestrahlt wird.

4. Verfahren nach einem der Ansprüche 1 bis 3, **dadurch gekennzeichnet, dass** brennbare Pyrolysegase einer Nachverbrennung mit Wärmegewinnung unterworfen werden.

5. Verfahren nach Anspruch 4, **dadurch gekennzeichnet, dass** die Temperatur bei der Nachverbrennung 850 bis 900°C beträgt.

6. Verfahren nach Anspruch 4 oder Anspruch 5, **dadurch gekennzeichnet, dass** die Nachverbrennung in einer auf dem Prinzip einer zirkulierenden Wirbelschicht funktionierenden Nachbrennkammer (14) erfolgt.

7. Verfahren nach einem der Ansprüche 1 bis 6, **dadurch gekennzeichnet, dass** die Schmelze aus der zweiten Stufe in einer dritten Stufe unter reduzierenden Bedingungen nachbehandelt wird, wobei eine Glasschmelze und eine Metallschmelze getrennt gewonnen werden.

8. Verfahren nach Anspruch 7, **dadurch gekennzeichnet, dass** die Nachbehandlung der Schmelze in der dritten Stufe in zwei nacheinandergeschalteten Teilstufen erfolgt, wobei die Glasschmelze aus der ersten Teilstufe der zweiten Teilstufe zugeführt und dort nachbehandelt und gewonnen wird, wobei die Metallschmelze getrennt aus beiden Teilstufen gewonnen wird.

9. Verfahren nach einem der Ansprüche 1 bis 8, **dadurch gekennzeichnet, dass** in der ersten Stufe der Müll durch einen Feuerungsraum (4) eines ortsfesten Pyrolyseofens (1) auf einem Rost (5) unter Umwälzen transportiert und dabei pyrolysiert wird.

10. Verfahren nach einem der Ansprüche 1 bis 8, **dadurch gekennzeichnet, dass** in der ersten Stufe der Müll in einem als Drehtrommel ausgebildeten Feuerungsraum eines Drehrohrofens pyrolysiert wird.

11. Verfahren nach einem der Ansprüche 1 bis 10, **dadurch gekennzeichnet, dass** als den Sauerstoff enthaltendes Gas technischer Sauerstoff mit mindestens 90% Sauerstoffanteil verwendet wird.

12. Verfahren nach einem der Ansprüche 1 bis 11, **dadurch gekennzeichnet, dass** die Beaufschlagung des festen Pyrolyseproduktes mit dem mindestens 40% Sauerstoff enthaltenden Gas mit mindestens Schallgeschwindigkeit durchgeführt wird.

13. Vorrichtung zum Durchführen des Verfahrens nach Anspruch 1, **gekennzeichnet durch** einen Pyrolyseofen (1) zum Durchführen einer Pyrolyse des Mülls, mit Mitteln zum Transportieren und Umwälzen des Mülls **durch** einen Feuerungsraum (4), in dem oberhalb der Müllschicht wenigstens eine Einlassöffnung (7) für mindestens 40% Sauerstoff enthaltendes Gas vorgesehen ist und **durch** einen an den Pyrolyseofen (1) angeschlossenen Schmelzofen (10) zum Durchführen einer Verschmelzung des festen Pyrolyseproduktes, der mit Mitteln zur Beaufschlagung des festen Pyrolyseproduktes aus der ersten Stufe mit mindestens 40% Sauerstoff enthaltendem Gas versehen ist.

14. Vorrichtung nach Anspruch 13, **dadurch gekennzeichnet, dass** der Schmelzofen (10) einen vertikalen, zylindrischen Ofenraum (12) aufweist, in welchen die Mittel zur Beaufschlagung des festen Pyrolyseproduktes aus der ersten Stufe mit dem mindestens 40% Sauerstoff enthaltenden Gas vorzugsweise in Form von schräg nach unten gerichteten Lanzen münden.

15. Vorrichtung nach Anspruch 14, **dadurch gekennzeichnet, dass** die Lanzen tangential zu einem imaginären, in einem Abstandvon der Wand liegenden Kreis in den Ofenraum (12) münden.

16. Vorrichtung nach Anspruch 13, **dadurch gekennzeichnet, dass** der Pyrolyseofen (1 ) einen ortsfesten Feuerungsraum (4) aufweist, wobei die Mittel zum Transportieren und Umwälzen des Mülls durch einen in diesem Feuerungsraum (4) angeordneten Rost (5) gebildet sind.

17. Vorrichtung nach Anspruch 13, **dadurch gekennzeichnet, dass** der Pyrolyseofen als ein Drehrohrofen ausgebildet ist, wobei die Mittel zum Transportieren und Umwälzen des Mülls durch einen als Drehtrommel ausgebildeten Feuerungsraum gebildet sind.

## Claims

1. Process for the thermal disposal of loose waste, which, in a first stage, is conveyed and turned over and dried and freed of volatile constituents by substoichiometric combustion processes and subsequently, in a second stage, is burned or melted, **characterized in that** the loose waste is pyrolysed in the first stage by feeding in a gas containing at least 40% oxygen above the layer of waste in such a way that a combustion of volatile constituents takes place above the layer of waste, whereby a solid pyrolysis product and combustible pyrolysis gases are produced by means of thermal radiation and **in that**, in the second stage, the solid pyrolysis product is melted by combustion of its combustible constituents and, if appropriate, by combustion of pyrolysis gases, with as much oxygen as is required for producing the melting heat being fed in with a gas containing at least 40% oxygen.

2. Process according to Claim 1, **characterized in that**, in the second stage, additional melting heat is supplied by a partial combustion of combustible pyrolysis gases from the first stage.

3. Process according to Claim 2, **characterized in that** the combustion of combustible pyrolysis gases in the second stage takes place with oxygen additionally being fed into the space above the melt, the heat generated in the gas combustion being radiated onto the melt.

4. Process according to one of Claims 1 to 3, **characterized in that** combustible pyrolysis gases are subjected to a subsequent combustion with heat recovery.

5. Process according Claim 4, **characterized in that** the temperature during the subsequent combustion is 850 to 900°C.

6. Process according to Claim 4 or Claim 5,
**characterized in that** the subsequent combustion takes place in an afterburning chamber (14) operating on the principle of a circulating fluidized bed.

7. Process according to one of Claims 1 to 6, **characterized in that** the melt from the second stage is subsequently treated in a third stage under reducing conditions, a glass melt and a metal melt being obtained separately.

8. Process according to Claim 7, **characterized in that** the subsequent treatment of the melt in the third stage takes place in two partial stages arranged one after the other, the glass melt from the first partial stage being fed to the second partial stage and subsequently treated and obtained there, the metal melt being obtained separately from both partial stages.

9. Process according to one of Claims 1 to 8, **characterized in that**, in the first stage, the waste is transported through a combustion chamber (4) of a stationary pyrolysis furnace (1) on a grating (5) while being turned over and is thereby pyrolysed.

10. Process according to one of Claims 1 to 8, **characterized in that**, in the first stage, the waste is pyrolysed in a combustion chamber of a rotary kiln, the combustion chamber being designed as a rotating drum.

11. Process according to one of Claims 1 to 10, **characterized in that** industrial oxygen with an oxygen fraction of at least 90% is used as the gas containing oxygen.

12. Process according to one of Claims 1 to 11, **characterized in that** the solid pyrolysis product is subjected to the gas containing at least 40% oxygen at at least the speed of sound.

13. Apparatus for carrying out the process according to Claim 1, **characterized by** a pyrolysis furnace (1) for carrying out a pyrolysis of the waste, with means for transporting the waste through a combustion chamber (4) and turning it over, in which chamber at least one inlet opening (7) for gas containing at least 40% oxygen is provided above the layer of waste and **characterized by** a melting furnace (10) connected to the pyrolysis furnace (1) for carrying out a melting of the solid pyrolysis product, which melting furnace is provided with means for subjecting the solid pyrolysis product from the first stage to gas containing at least 40% oxygen.

14. Apparatus according to Claim 13, **characterized in that** the melting furnace (10) has a vertical, cylindrical furnace chamber (12), into which the means for subjecting the solid pyrolysis product from the first stage to the gas containing at least 40% oxygen preferably open out in the form of lances directed obliquely downwards.

15. Apparatus according to Claim 14, **characterized in that** the lances open out into the furnace chamber (12) tangentially in relation to an imaginary circle lying at a distance from the wall.

16. Apparatus according to Claim 13, **characterized in that** the pyrolysis furnace (1) has a stationary combustion chamber (4), the means for transporting and turning over the waste being formed by a grating (5) arranged in this combustion chamber (4).

17. Apparatus according to Claim 13, **characterized in that** the pyrolysis furnace is designed as a rotary kiln, the means for transporting and turning over the waste being formed by a combustion chamber designed as a rotating drum.

## Revendications

1. Procédé d'élimination thermique d'ordures en vrac, circulées et véhiculées et séchées dans un premier étage, par des processus de combustion sous-stoechiométriques, et débarrassés des constituants volatils, puis brûléees ou fondues dans un deuxième étage, **caractérisé en ce que** les ordures en vrac sont pyrolysées dans le premier étage, en amenant au-dessus de la couche d'ordure un gaz comprenant au moins 40 % d'oxygène, **en ce qu'**une combustion des constituants volatils s'effectue au-dessus de la couche d'ordures, faisant que, au moyen du rayonnement thermique, un produit de pyrolyse solide et des gaz de pyrolyse combustibles sont générés, et **en ce que**, dans le deuxième étage, le produit de pyrolyse solide est fondu par combustion de ses constituants combustibles et, le cas échéant, par combustion des gaz de pyrolyse, une quantité d'oxygène, satisfaisant à la génération de la chaleur de fusion, avec un gaz contenant au moins 40 % d'oxygène, étant fournie.

2. Procédé selon la revendication I, **caractérisé en ce que** de la chaleur de fusion supplémentaire est fournie dans le deuxième étage, par une combustion partielle des gaz de pyrolyse combustibles issus du premier étage.

3. Procédé selon la revendication 2, **caractérisé en ce que** la combustion des gaz de pyrolyse combustible dans le deuxième étage s 'effectue sous apport supplémentaire d'oxygène, dans l'espace situé au-dessus de la masse fondue, la chaleur générée par la combustion du gaz étant irradiée sur la masse fondue.

4. Procédé selon l'une des revendications 1 à 3, **caractérisé en ce que** les gaz de pyrolyse combustibles sont soumis à une postcombustion avec récupération de la chaleur.

5. Procédé selon la revendication 4, **caractérisé en ce que** la température manifestée lors de la postcombustion est de 850 à 900°C.

6. Procédé selon la revendication 4 ou 5, **caractérisé en ce que** la postcombustion s' effectue dans une chambre de postcombustion (14) fonctionnant selon le principe d'un lit fluidisé circulant.

7. Procédé selon l'une des revendications 1 à 6, **caractérisé en ce que** la masse fondue issue du deuxième étage est retraitée dans un troisième étage, dans des conditions réductrices, une masse fondue de verre et une masse fondue de métaux étant obtenues séparément.

8. Procédé selon la revendication 7, **caractérisé en ce que** le retraitement de la masse fondue dans le troisième étage s'effectue dans deux étages partiels mis en circuit l'un derrière l' autre, la masse fondue de verre issue du premier étage partiel étant amenée au deuxième étage partiel et y étant retraitée et récupérée, la masse fondue métallique étant récupérée séparément, à partir des deux étages partiels.

9. Procédé selon l'une des revendications 1 à 8, **caractérisé en ce que** les ordures sont transportées en circulant dans le premier étage, à travers une chambre de combustion (4) d'un four de pyrolyse (1) localement fixe, sur une grille (5), et sont alors pyrolysées.

10. Procédé selon l'une des revendications 1 à 8, **caractérisé en ce que**, dans le premier étage, les ordures sont pyrolysées dans une chambre de combustion, réalisée sous la forme d' un tambour rotatif, d' un four tubulaire rotatif.

11. Procédé selon l'une des revendications 1 à 10, **caractérisé en ce que** de l' oxygène technique, ayant une proportion en oxygène d'au moins 90 %, est utilisé à titre de gaz contenant le l'oxygène.

12. Procédé selon l'une des revendications 1 à 11, **caractérisé en ce que** l'exposition du produit de pyrolyse solide au gaz contenant au moins 40 % d'oxygène est effectuée à au moins la vitesse du son.

13. Dispositif pour la mise en oeuvre du procédé selon la revendication 1, **caractérisé par** un four de pyrolyse (1) pour conduire une pyrolyse des ordures, avec des moyens de transport et de circulation des ordures dans une chambre de combustion (4), dans laquelle, au-dessus de la couche d' ordures, est prévue au moins une ouverture d'admission (7) pour un gaz contenant au moins 40 % d'oxygène, et par un four de fusion (10) raccordé au four de pyrolyse (1), pour effectuer une mise en fusion du produit de pyrolyse solide, qui est muni de moyens pour soumettre le produit de pyrolyse solide issu du premier étage à des gaz contenant au moins 40 % d'oxygène.

14. Dispositif selon la revendication 13, **caractérisé en ce que** le four de fusion (10) présente une chambre de four (12) cylindrique verticale, dans laquelle débouchent les moyens d'exposition du produit de pyrolyse solide, issu du premier étage, au gaz contenant au moins 40 % d'oxygène, moyens réalisés, de préférence, sous la forme de lances tournées, obliquement vers le bas.

15. Dispositif selon la revendication 14, **caractérisé en ce que** les lances débouchent dans la chambre de four (12), tangentiellement à un cercle imaginaire, situé à distance de la paroi.

16. Dispositif selon la revendication 13, **caractérisé en ce que** le four de pyrolyse (1) présente une chambre de combustion (4) localement fixe, les moyens de transport et de circulation des ordures étant constitués par une grille (5) disposée dans cette chambre de combustion (4).

17. Dispositif selon la revendication 13, **caractérisé en ce que** le four de pyrolyse est réalisé sous la forme d'un four tubulaire rotatif, les moyens de transport et de mise en circulation des ordures étant constitués par une chambre de combustion réalisée sous la forme d'un tambour rotatif.
